# EUROPEAN PATENT APPLICATION

(11) **EP 1 471 414 A1**
(43) Date of publication of application: **27.10.2004**
(21) Application number: 03734879.4
(22) Date of filing: 29.01.2003
(51) Int. Cl.: G06F 3/033

(54) **TRACKBALL**

(30) Priority: 29.01.2002 JP 2002020796
(71) Applicant: Tamagawa Seiki Co. Ltd., Iida-shi, Nagano 395-8515 (JP)
(72) Inventor: NAKAYAMA, Kiichi c/o TAMAGAWA SEIKI CO., LTD., Hachinohe-shi, Aomori 039-2245 (JP); HAMA, Nobuharu c/o TAMAGAWA SEIKI CO., LTD., Hachinohe-shi, Aomori 039-2245 (JP)
(74) Representative: Jenkins, Peter David
(86) International application number: PCT/JP2003/000865
(87) International publication number: WO 2003/065194

(57) **Abstract**

A trackball capable of shining the ball in a dark place or in a dark state, preventing entrance of foreign matter, such as water or dust, into the case, increasing the degree of freedom of disposition and installation position of a lamp to thereby improve assemblability; and a trackball system. That is, the track ball comprises a transparent or semitransparent ball (1) penetrable to light, a case (2) for internally receiving the inner structure including detection shafts, a light source (3) having a cover and disposed in the case (2), the light source being an LED or the like that is a light source for radiating light to shine the ball (1), wherein the case (2) is transparent or semitransparent.

## Description

### Technical Field

The present invention relates to a track ball and a track ball system. More particularly, it relates to a track ball and a track ball system for facilitating an input operation at a dark place or in a dark state.

### Background Art

A track ball, which is a pointing device for a computer and other various types of digital equipment, has a ball, which is an input operation part, an internal structure consisting of a detecting shaft etc. for detecting the rotation of ball, and a housing for containing a part of the ball and the internal structure. In a conventional track ball, especially a track ball for facilitating an input operation at a dark place or in a dark state, the ball is made of a transparent or semitransparent material, and has means for making the ball shine by irradiating the ball with light by using a lamp such as a light emitting diode (hereinafter referred to as an "LED") provided in a case.

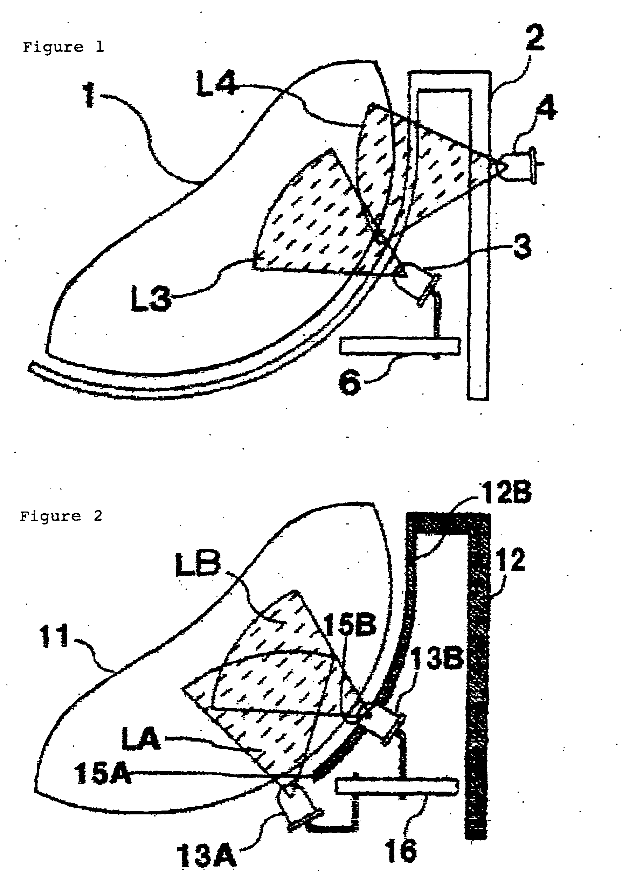

Figure 2 is an explanatory view showing one example of a method for irradiating light in the conventional track ball, viewed from the side. In Figure 2, the track ball for input operation at a dark place has a transparent or semitransparent ball 11, a case 12, and a cover (not shown), and lamps 13A and 13B such as LED's, which are light sources for emitting light to make the ball 11 shine, are provided in the case 12. Since the case 12 is opaque, in order to irradiate the ball 11 with light emitted from the lamps 13A and 13B, holes 15A and 15B for transmitting light are provided in a ball-side portion 12B of the case 12, which is on the side facing the ball 11. The lamps 13A and 13B are insertedly fitted in these holes 15A and 15B, or are provided in such a state that the ball 11 can be irradiated with light through these holes 15A and 15B. By this configuration, the ball 11 is irradiated with light emitted from the lamps 13A and 13B through the holes 15A and 15B, by which the ball 11 can be made to shine.

However, the conventional track ball has a problem in that through the holes 15A and 15B provided to transmit light, foreign matters such as water and dirt intrude into the case 12 from the outside, and inhibit the function of the internal structure such as the detecting shaft, resulting in a decrease in performance and durability of track ball.

Furthermore, there arises a problem in that it is necessary to make the installation positions of the lamps 13A and 13B coincide with the positions of the holes 15A and 15B, so that the number of work processes is large and the assembling work is difficult to do.

An object of the present invention is to provide a track ball and a track ball system which are capable of eliminating the above-described drawbacks of the prior art, that is, which are capable of making the ball shine at a dark place or in a dark state, capable of preventing foreign matters such as water and dirt from intruding into the case, and capable of improving the assembling efficiency by increasing the degree of freedom of the arrangement and installation position of the lamp.

### Disclosure of the Invention

The inventors conducted studies earnestly on the above-described problems, and resultantly found that the problems can be solved by making the case transparent. Specifically, the invention claimed in this application as means for solving the above-described problems is as follows:
(1) A track ball having a ball, an internal structure, and a housing, characterized in that the ball and at least a part of the housing transmit light.
(2) The track ball described in item (1), characterized in that the housing includes a case for containing the internal structure and a cover serving as an upper lid, and at least the whole or a part of the case transmits light.
(3) The track ball described in item (1) or (2), characterized in that a light source is contained in the housing together with the internal structure.
(4) A track ball system including the track ball described in any one of items (1) to (3) and a light source provided on the outside of the housing of track ball to irradiate the ball with light.

In the present invention, in order to eliminate hindrance to irradiation of light from the light source to the ball between the light source provided in the housing of track ball and the ball, at least a part of the housing is formed by a light transmitting material, not providing a hole for transmitting light in one portion of the housing. Thereby, the hole in the case, which causes the problems with the prior art, is made unnecessary, by which the above-described problems are solved.

The light transmitting material may be any one that achieves a function of transmitting light, and the present invention is not limited by the kind of material. Any housing formed by such a material can be used as long as it can transmit light to make the ball shine, and the present invention is not limited by the degree of transparency, being transparent or semitransparent.

The housing of track ball includes the case for containing the internal structure of track ball and the cover serving as an upper lid, and at least the whole or a part of the case can transmit light. In this case, if a portion of case constructed so as to transmit light includes a region of at least a part of light path between the light source and the ball, the need for providing a hole can be eliminated, so that the problem caused by the intrusion of foreign matters can be solved. Further, to solve the problem of improved assembling efficiency of track ball, the portion of case constructed so as to transmit light preferably has an area that is wide to some extent. Therefore, the whole of a portion of case that faces the ball (hereinafter referred simply to as a "ball-side portion") can be constructed so as to transmit light. Also, the whole of the case including portions other than the ball-side portion can be constructed so as to transmit light.

The light source can be contained in the housing together with the internal structure in the case. The light emitting system, the type, the number of light sources installed, the installation position, and the like of the light source can be determined appropriately, and the present invention is not limited by these factors.

Also, there can be configured the track ball system consisting of the track ball and the light source on the outside of the housing, in which the light source is provided on the outside of the housing, not in the case, and light is transmitted through the housing such as the case from the outside to make the ball shine. In this case as well, the light emitting system, the type, the number of light sources installed, the installation position, and the like of the light source on the outside of the housing can be determined appropriately, and the present invention is not limited by these factors.

As the light source, a light source that emits visible light can be used.

### Brief Description of the Drawings

Figure 1 is an explanatory view showing a construction of a track ball in accordance with the present invention; and
Figure 2 is an explanatory view showing a construction of a conventional track ball.

Symbols used in these figures designate the followings. 1, 11 ... Ball, 2, 12 ... Case, 3, 4, 13A, 13B ... Light source, 6, 16 ... Base plate, 12B ... Ball-side portion of case, 15A, 15B ... Hole, L3, L4, LA, LB ... Light irradiation

### Best Mode for Carrying Out the Invention

The present invention will now be described in detail with reference to the accompanying drawing. The present invention is not limited to the embodiment described below.

Figure 1 is an explanatory view showing a schematic construction of an essential portion of one example of a track ball in accordance with the present invention. In Figure 1, the track ball in accordance with the present invention has a transparent or semitransparent ball 1 that transmits light, a case for containing an internal structure such as a detecting shaft, and a cover (not shown). In the case 2, there are mainly provided a light source 3 such as an LED that emits light for making the ball 1 shine and a base plate 16, and the case 2 is characterized by being transparent or semitransparent.

In Figure 1, since the present invention has the above-described configuration, the light emitted from the light source 3 transmits the transparent or semitransparent case 2 that transmits light, and falls on the ball 1, by which the ball 1 can be made to shine. The light source 3 can be installed at an appropriate position in the case 2, and a hole for irradiating the ball 1 with light need not be formed in the case 2. Therefore, foreign matters such as water and dirt can be prevented from intruding into the case 2.

In Figure 1, the light source may be a light source 4 provided on the outside of the case 2. In this case, the light emitted from the light source 4 transmits the transparent or semitransparent case 2 that transmits light, and falls on the ball 1, by which the ball 1 can be made to shine. The light source 3 can be installed at an appropriate position on the outside of the case 2, and a hole for irradiating the ball 1 with light need not be formed in the case 2. Therefore, foreign matters such as water and dirt can be prevented from intruding into the case 2. A track ball system in accordance with the present invention is configured by the light source 3 and the track ball having the above-described construction.

The light sources 3 and 4 do not indicate that the provision of these two light sources is a must for the track ball or the track ball system in accordance with the present invention. As explained above, either one of the light sources 3 and 4 shown in Figure 1 suffices for the track ball or the track ball system. The provision of both of the light sources need not be excluded, and such a configuration is also in the scope of the present invention.

### Industrial Applicability

According to the track ball and the track ball system in accordance with the present invention, in the track ball which makes the ball shine at a dark place or in a dark state, foreign matters such as water and dirt can be prevented from intruding into the case, and the assembling efficiency can be improved by increasing the degree of freedom of the arrangement and installation position of the lamp. Thereby, the durability and reliability of track ball can be enhanced, and the assembling work can be made easy, so that the improvement in performance and the reduction in cost can be achieved.

## Claims

1. A track ball having a ball, an internal structure, and a housing, **characterized in that** said ball and at least a part of said housing transmit light.

2. The track ball according to claim 1, **characterized in that** said housing comprises a case for containing said internal structure and a cover serving as an upper lid, and at least the whole or a part of said case transmits light.

3. The track ball according to claim 1 or 2, **characterized in that** a light source is contained in said housing together with said internal structure.

4. A track ball system **characterized by** comprising the track ball according to any one of claims 1 to 3 and a light source provided on the outside of said housing of track ball to irradiate said ball with light.
